Europäisches Patentamt

**European Patent Office**

Office européen des brevets

(11) Veröffentlichungsnummer: **0 258 721 B1**

# EUROPÄISCHE PATENTSCHRIFT

(45) Veröffentlichungstag der Patentschrift: **09.10.91**

(51) Int. Cl.5: **G11B 20/18**, G06F 11/10

(21) Anmeldenummer: **87111867.5**

(22) Anmeldetag: **17.08.87**

(54) **Verfahren und Einrichtung zur Dropoutkompensation bei der Wiedergabe magnetisch aufgezeichneter Signale.**

(30) Priorität: **04.09.86 DE 3630179**

(43) Veröffentlichungstag der Anmeldung:
**09.03.88 Patentblatt 88/10**

(45) Bekanntmachung des Hinweises auf die
Patenterteilung:
**09.10.91 Patentblatt 91/41**

(84) Benannte Vertragsstaaten:
**AT DE FR GB**

(56) Entgegenhaltungen:
**EP-A- 0 132 086**
**EP-A- 0 149 245**
**EP-A- 0 170 328**
**EP-A- 0 198 702**

(73) Patentinhaber: **GRUNDIG E.M.V. Elektro-Mechanische Versuchsanstalt Max Grundig holländ. Stiftung & Co. KG.
Kurgartenstrasse 37
W-8510 Fürth/Bay.(DE)**

(72) Erfinder: **Opelt, Christian
Grundig E.M.V Kurgartenstrasse 37
W-8510 Fuerth(DE)**

## Beschreibung

Die Erfindung betrifft ein Verfahren und eine Einrichtung zur Dropoutkompensation bei der Wiedergabe magnetisch aufgezeichneter Signale mit den im Oberbegriff des Anspruchs 1 bzw. Anspruchs 6 angegebenen Merkmalen.

Bei der Wiedergabe magnetisch aufgezeichneter Signale wird üblicherweise eine Schaltung zur Dropoutkompensation verwendet. Mittels dieser werden Signalausfälle im wiedergegebenen Signal erkannt und durch Informationen vorheriger Signalabschnitte ersetzt, welche in einem Dropoutspeicher zwischengespeichert wurden. Die Dropoutkompensation kann entweder im zeitfehlerbehafteten Signal erfolgen oder aber bei der Zeitfehlerkorrektur durch Mitausnutzung der ohnehin vorhandenen Speicheranordnung.

Diese bekannten Verfahren sind allerdings nicht anwendbar, wenn eine mehrkanalige Aufzeichnung vorliegt (siehe beispielsweise nicht vorveröffentlichte Patentanmeldung DE-A-36 13 798 vom 24.04.86) und im Dropoutfall eine Information aus einem anderen Kanal anstelle der gestörten Information eingesetzt werden soll, da die aus verschiedenen Spuren wiedergegebenen Signale unterschiedliche Zeitfehler aufweisen. Eine Dropoutkompensation kann in diesem Fall nur nach der Zeitfehlerkorrektur erfolgen.

Aus der EP-A-0 174 822 und der EP-A-0 124 281 sind bereits Verfahren zur Dropoutkompensation (einkanalig) wiedergegebener Signale bekannt, bei denen durch Auswertung des wiedergegebenen Signals ein Kennsignal erzeugt wird, welches angibt, ob ein Dropout vorliegt oder nicht. Das Kennsignal wird in das wiedergegebene Signal eingesetzt und zusammen mit diesem zeitfehlerkorrigiert. Das aus dem zeitfehlerkorrigierten Signal abgetrennte Kennsignal wird dazu verwendet, das Ausgangssignal eines Dropoutspeichers als Ersatz für den gestörten Signalabschnitt einzusetzen.

Der Erfindung liegt die Aufgabe zugrunde, ein Verfahren anzugeben, mittels dessen eine Dropoutkompensation auch dann erfolgen kann, wenn im Dropoutfall eine Information aus einem anderen Kanal anstelle der gestörten Information eingesetzt werden soll.

Diese Aufgabe wird durch die im kennzeichnenden Teil des Anspruchs 1 angegebenen Merkmale gelöst. Die Ansprüche 2 bis 5 betreffen vorteilhafte Ausgestaltungen des im Anspruch 1 angegebenen Verfahrens. Die Ansprüche 6 bis 11 beschreiben eine Einrichtung zur Dropoutkompensation nach der vorliegenden Erfindung.

Die Vorteile der Erfindung bestehen insbesondere darin, daß am Ausgang der zur Zeitfehlerkorrektur verwendeten Speicheranordnung ein zeitlich richtiges Kennsignal zur Verfügung gestellt wird, ohne daß zur Übertragung des Kennsignals zusätzlicher Speicherplatz benötigt wird. Dieses Kennsignal wird ausgewertet und zur Steuerung des Dropoutspeichers verwendet. Weitere vorteilhafte Eigenschaften ergeben sich aus einem Ausführungsbeispiel, welches im folgenden anhand der (einzigen) Figur näher erläutert wird.

Ein breitbandiges Videosignal sei derart aufgezeichnet, daß aufeinanderfolgende Informationsabschnitte nebeneinanderliegenden Schrägspuren eines Magnetbandes zugeordnet sind. Um dies zu erreichen, können beispielsweise aufzeichnungsseitig die aufeinanderfolgenden Zeilen eines breitbandigen Videosignals unterschiedlichen Speicherelementen eines Speichers zugeführt und dort zeitexpandiert werden. Diese zeitexpandierten Signale werden auf die beiden genannten Schrägspuren verteilt. Ein solches Aufzeichnungsverfahren, von dem die Erfindung ausgeht, ist beispielsweise in der bereits oben genannten nicht vorveröffentlichten deutschen Patentanmeldung DE-A-36 13 798 beschrieben.

Bei der Wiedergabe werden derartige Signale von den Wiedergabeköpfen 1 und 2 wiedergegeben (siehe Figur). Die wiedergegebenen Signale, die unterschiedlich zeitfehlerbehaftet sind, werden in Wiedergabeverstärkern 2 (bzw. 12) verstärkt. Die verstärkten Signale gelangen einerseits an Demodulatoren 3 (bzw. 13) und andererseits an Dropoutdetektoren 6 (bzw. 16). Die demodulierten Signale werden in Analog-Digital-Wandlern 4 (bzw. 14) digitalisiert bzw. in einen 8-Bit-Datenstrom umgewandelt.

Mittels dieses 8-Bit Datenstroms können insgesamt $2^8$ = 256 verschiedene Auflösungsstufen dargestellt werden. In einer Schaltung 5 (bzw. 15) wird der 8-Bit-Datenstrom daraufhin überprüft, ob eine bestimmte vorgegebene Bitkombination auftritt oder nicht Beispielsweise kann der Bitstrom daraufhin überprüft werden, ob alle Bits gesetzt sind.

Ist das der Fall, dann wird das LSB (Least Significant Bit) zu Null gesetzt. Damit ist sichergestellt, daß am Ausgang der Schaltung 5 (bzw. 15) niemals alle Bits gesetzt sind. Dies bewirkt letztendlich eine Verringerung der Signalauflösung von 256 Auflösungsstufen um eine auf 255 Auflösungsstufen. Diese geringfügige Verringerung der Auflösung kann vom menschlichen Auge nicht wahrgenommen werden, da die fehlende Auflösungsstufe am Rande des Aussteuerungsbereiches liegt.

Sind nicht alle Bits gesetzt, dann gelangt der Bitstrom unverändert an den Ausgang der Schaltung 5 (bzw. 15).

Die Dropoutdetektoren 6 (bzw. 16) überprüfen das wiedergegebene Signal - beispielsweise durch Auswertung der Hüllkurve im Falle eines frequenzmodulierten Wiedergabesignals - auf Dropouts und erzeugen je ein Kennsignal, welches Auskunft darüber gibt, ob ein Dropout vorliegt oder nicht. Dieses Kennsignal wird über ein Verzögerungsglied 7 (bzw. 17) geleitet, um diejenige Verzögerung zu kompensieren, welcher das wiedergegebene Signal durch die Demodulation und die A/D-Wandlung unterworfen ist.

Das verzögerte Kennsignal wird einerseits verwendet, um den Schalter 9 (bzw. 19) zu steuern. Bei ungestörte Signal befindet sich der Schalter 9 (bzw. 19) in der Schaltstellung a, so daß der Schalter für das Ausgangssignal der Schaltung 5 (bzw. 15) durchlässig ist. Im Falle eines Dropouts wird der Schalter in seine Schaltstellung b gelegt, so daß der Schalter für das Ausgangssignal einer Schaltung 8 (bzw. 18) durchlässig ist. Die Schaltung 8 (bzw. 18) erzeugt im Falle eines Dropouts die reservierte Bitkombination. Diese wird über den Schalter 9 (bzw. 19) weitergegeben und damit in das digitale Videosignal eingesetzt.

Die Ausgangssignale der Schalter 9 (bzw. 19) werden einer Schaltung 20 zugeführt, in der die Signale zeittransformiert, zeitfehlerkorrigiert und zu einem einkanaligen Signal zusammengefäßt werden. Eine solche Schaltung ist beispielsweise in der oben genannten nicht vorveröffentlichten deutschen Patentanmeldung DE-A-36 13 798 beschrieben und kann aus einem Speicher mit mehreren Speicherelementen (RAM's) und einem Multiplexer bestehen.

Am Ausgang der Schaltung 20 liegt ein einkanaliger, zeitfehlerkorrigierter 8-Bit-Datenstrom an. Dieser wird dem Kontakt a eines Schalters 21, dem Kontakt c eines Schalters 23 und einer Schaltung 25 zur Auswertung des zeitfehlerkorrigierten Datenstroms zugeführt.

Die Schaltung 25 kann beispielsweise dann - wenn die reservierte Bitkombination ausschließlich aus "Einsen" besteht - ein UND-Gatter sein.

Das Ausgangssignal des UND-Gatters 25 wird den jeweiligen Steuereingängen eines Schalters 23, eines Dropoutspeichers 24 und eines weiteren Schalters 21 zugeführt.

Bei ungestörtem Signal befindet sich der Schalter 23 in seiner Schaltstellung b und der Schalter 21 in der Schaltstellung a. Folglich gelangt das ungestörte, am Ausgang der Schaltung 20 anliegende zeitfehlerkorrigierte Signal über den Schalter 21 und den D/A-Wandler 22 an den Ausgang A der Schaltung.

Ferner gelangt das ungestörte, am Ausgang der Schaltung 20 anliegende zeitfehlerkorrigierte Signal über den Schalter 23 in den Dropoutspeicher 24 und wird dort abgespeichert.

Im Falle eines Dropouts befindet sich der Schalter 23 in seiner Schaltstellung a und der Schalter 21 in der Schaltstellung b. Folglich ist das gestörte, am Ausgang der Schaltung 20 anliegende zeitfehlerkorrigierte Signal sowohl vom Ausgang A der Gesamtschaltung als auch vom Dropoutspeicher 24 abgetrennt. Stattdessen gelangt ein im Dropoutspeicher 24 abgespeichertes Signal über den Schalter 21 und den D/A-Wandler 22 an den Ausgang A der Schaltung.

Mittels der beschriebenen Einrichtung wird demnach das wiedergegebene zeitfehlerbehaftete Signal eines jeden Kanals vor der Demodulation auf Dropouts hin überprüft und je Kanal ein Kennsignal erzeugt. Diesem Kennsignal wird eine Bitkombination zugeordnet, welche einer bestimmten Auflösungsstufe bzw. Bitkombination des digitalen Videosignals entspricht. Im Weg des digitalen Videosignals ist eine Schaltung vorgesehen, die ausschließt, daß diese bestimmte Bitkombination im Videosignal auftritt. Das Kennsignal wird bei Vorliegen eines Dropouts in das Videosignal eingetastet und mit diesem der Zeitfehlerkorrektur unterworfen. Nach der Zeitfehlerkorrektur steht ein zeitrichtiges Kennsignal zur Verfügung, welches zur Steuerung des Dropoutspeichers bzw. Dropoutvorgangs verwendet werden kann.

Eine vorteilhafte Weiterbildung der Erfindung besteht darin, weitere Bitkombinationen des zeitfehlerbehafteten Signals zur Übertragung beliebiger Zusatzinformationen zu reservieren. Es muß lediglich darauf geachtet werden, daß selten auftretende Bitkombinationen, vorzugsweise am Rande des Aussteuerungsbereiches, verwendet werden.

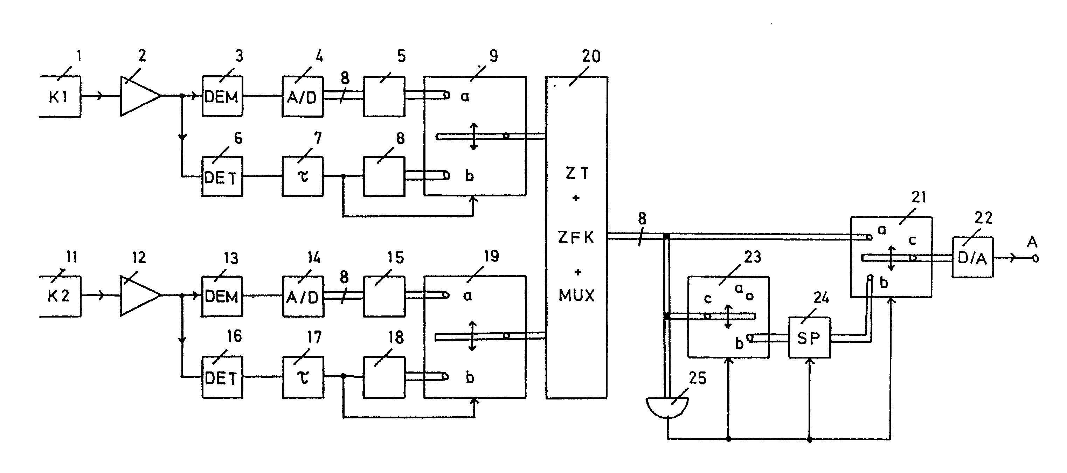

## Patentansprüche

1. Verfahren zur Dropoutkompensation bei der Wiedergabe magnetisch aufgezeichneter Signale, bei dem
   - durch Auswertung (6, 16) des wiedergegebenen Signals ein Kennsignal mit dafür reservierten Kenngrößen erzeugt (8, 16) wird, welches angibt, ob ein Dropout vorliegt oder nicht,
   - das Kennsignal dem wiedergegebenen Signal überlagert (9, 19) wird,
   - das zusammengesetzte Signal zeitfehlerkorrigiert (20) wird,
   - Kennsignale im zeitfehlerkorrigierten Signal detektiert (25) werden,
   - bei Vorliegen eines einen Dropoutfall anzeigenden Kennsignals das Ausgangssignal eines Dropout-Speichers (24) als Ersatz für das Kennsignal in das zeitfehlerkorrigierte Signal eingesetzt (21) wird, **dadurch gekennzeichnet, daß**
   - Signale aus mehreren Spuren eines Aufzeichnungsträgers gleichzeitig wiedergegeben werden,
   - die wiedergegebenen Signal digitalisiert (4, 14) werden,
   - in jedem Kanal mindestens eine Code-Bitkombination des zeitfehlerbehafteten digitalen Signals zur Übertragung des Kennsignals reserviert wird, und

- die zeitfehlerkorrigierten Signale zu einem einkanaligen Signal zusammengefaßt werden, wobei die Kennsignale im zusammengefaßten Signal durch das Ausgangssignal des Dropout-Speichers (24) ersetzt werden.

2. Verfahren nach Anspruch 1,
**dadurch gekennzeichnet, daß**
zur Übertragung des Kennsignals eine am Rande des Aussteuerungsbereiches liegende, im wiedergegebenen Signal selten auftretende Code-Bitkombination reserviert wird, welche im wiedergegebenen Signal ausgeschlossen wird.

3. Verfahren nach Anspruch 1 oder 2, **dadurch gekennzeichnet, daß** das Kennsignal zusammen mit dem zeitfehlerbehafteten Signal einer Zeittransformation unterworfen wird.

4. Verfahren nach einem der vorhergehenden Ansprüche, **dadurch gekennzeichnet, daß** das Kennsignal vor dem Einsetzen in das zeitfehlerbehaftete digitale Signal verzögert wird.

5. Verfahren nach einem der vorhergehenden Ansprüche, **dadurch gekennzeichnet, daß** weitere Bitkombinationen zur Übertragung zusätzlicher Informationen reserviert werden.

6. Einrichtung zur Dropoutkompensation bei der Wiedergabe magnetisch aufgezeichneter Signale mit

- einem Dropoutdetektor (6, 16), welcher das wiedergegebene zeitfehlerbehaftete Signal auf Dropouts hin überprüft und ein Kennsignal mit dafür reservierten Kenngrößen erzeugt, welches angibt, ob ein Dropout vorliegt oder nicht,
- einer Schaltung (9, 19) zur Überlagerung des Kennsignals und des wiedergegebenen Signals,
- einer Schaltung (20) zur Zeitfehlerkorrektur des zusammengesetzten Signals,
- einer Schaltung (25) zur Detektion der Kennsignale im zeitfehlerkorrigierten Signal,
- einem Dropoutspeicher (24), dessen Ausgangssignal bei Vorliegen eines einen Dropoutfall anzeigenden Kennsignals als Ersatz für das Kennsignal in das zeitfehlerkorrigierte Signal eingesetzt wird,
**gekennzeichnet durch**
- Wiedergabemittel (K1, K2) zur gleichzeitigen Wiedergabe von Signalen aus mehreren Spuren eines Aufzeichnungsträgers,

- Analog-Digital-Wandler (4, 14) zur Digitalisierung der wiedergegebenen Signale,
- eine Schaltung (5, 15) in jedem Kanal zur Reservierung mindestens einer Code-Bitkombination des zeitfehlerbehafteten digitalen Signals zur Übertragung des Kennsignals, und
- eine Schaltung (20) zur Zusammenfassung der zeitfehlerkorrigierten Signale zu einem einkanaligen Signal, wobei die Kennsignale im zusammengesetzten Signal duch das Ausgangssignal des Dropoutspeichers (24) ersetzt werden.

7. Einrichtung nach Anspruch 6,
**dadurch gekennzeichnet, daß** die Schaltungen (5, 15) zur Übertragung des Kennsignals eine am Rande des Aussteuerungsbereiches liegende, im wiedergegebenen Signal selten auftretende Code-Bitkombination des zeitfehlerbehafteten digitalen Signals reservieren, welche im wiedergegebenen Signal ausgeschlossen wird.

8. Einrichtung nach Anspruch 6 oder 7,
**dadurch gekennzeichnet, daß** die Schaltungen (9, 19) zur Überlagerung des Kennsignals und des wiedergegebenen Signals Schalter sind.

9. Einrichtung nach einem der Ansprüche 6 bis 8, **dadurch gekennzeichnet, daß** die Schaltung (25) zur Detektion der Kennsignale im zeitfehlerkorrigierten Signal ein UND-Glied ist.

10. Einrichtung nach einem der Ansprüche 6 bis 9, **dadurch gekennzeichnet, daß** die Schaltung (20) zur Zeitfehlerkorrektur mehrere RAM's aufweist, in denen das Signal zusätzlich zeittransformiert wird.

11. Einrichtung nach einem der Ansprüche 6 bis 10,
**dadurch gekennzeichnet, daß** in jedem Kanal das Ausgangssignal des Dropoutdetektors (6, 16) einem Verzögerungsglied (7, 17) zugeführt wird.

## Claims

1. Method for dropout compensation during the reproduction of magnetically recorded signals, in which method

- an identification signal with identification quantities reserved for this purpose (8, 18), which specifies whether a dropout is present or not, is generated by evaluation (6, 16) of the reproduced signal,
- the identification signal is superimposed on the reproduced signal (9, 19),
- the composite signal is time-base error corrected (20),
- identification signals are detected (25) in the time-base error corrected signal,
- if an identification signal indicating a dropout case is present, the output signal of a dropout store (24) is inserted into the time-base error corrected signal (21) as replacement for the identification signal,

characterised in that
- signals from several tracks of a recording medium are simultaneously reproduced,
- the reproduced signals are digitised (4, 14),
- in each channel, at least one code-bit combination of the digital signal with time-base error is reserved for transmission of the identification signal, and
- the time-base error corrected signals are combined to form a single-channel signal, the identification signals in the combined signal being replaced by the output signal of the dropout store (24).

2. Method according to Claim 1, characterised in that for the transmission of the identification signal, a code-bit combination which rarely occurs in the reproduced signal and which is located at the edge of the modulation range, is reserved which is eliminated in the reproduced signal.

3. Method according to Claim 1 or 2, characterised in that the identification signal, together with the signal with time-base error, is subjected to a time-base transformation.

4. Method according to one of the preceding Claims, characterised in that the identification signal is delayed before it is inserted into the digital signal with time-base error.

5. Method according to one of the preceding Claims, characterised in that further bit combinations are reserved for the transmission of additional information items.

6. Device for dropout compensation during the reproduction of magnetically recorded signals, comprising
- a dropout detector (6, 16) which checks the reproduced signal with time-base error for dropouts and generates an identification signal with identification quantities reserved for this purpose, which signal indicates whether a dropout is present or not,
- a circuit (9, 19) for superimposing the identification signal and the reproduced signal,
- a circuit (20) for time-base error correction of the combined signal,
- a circuit (25) for detecting the identification signals in the time-base error corrected signal,
- a dropout store (24), the output signal of which is inserted into the time-base error corrected signal as replacement for the identification signal when an identification signal indicating a dropout case is present,

characterised by
- reproduction means (K1, K2) for the simultaneous reproduction of signals from several tracks of a recording medium,
- analog/digital converter (4, 14) for digitising the reproduced signals,
- a circuit (5, 15) in each channel for reserving at least one code-bit combination of the digital signal with time-base error for the transmission of the identification signal, and
- a circuit (20) for combining the time-base error corrected signals to form a single-channel signal, the identification signals in the combined signal being replaced by the output signal of the dropout store (24).

7. Device according to Claim 6, characterised in that the circuits (5, 15) for the transmission of the identification signal reserve a code-bit combination, which rarely occurs in the reproduced signal and is located at the edge of the modulation range, of the digital signal with time-base error, which code-bit combination is eliminated in the reproduced signal.

8. Device according to Claim 6 or 7, characterised in that the circuits (9, 19) for superimposition of the identification signal and of the reproduced signal are switches.

9. Device according to one of Claims 6 to 8, characterised in that the circuit (25) for the detection of the identification signals in the time-base error corrected signal is an AND-section.

10. Device according to one of Claims 6 to 9, characterised in that the circuit (20) for time-base error correction exhibits several RAM's in which the signal is additionally time-base transformed.

**11.** Device according to one of Claims 6 to 10, characterised in that in each channel, the output signal of the dropout detector (6, 16) is supplied to a delay section (7, 17).

**Revendications**

**1.** Procédé pour compenser des manques de signal lors de la reproduction de signaux enregistrés magnétiquement, selon lequel
   - une évaluation (6,16) du signal reproduit fournit (8,18) un signal caractéristique possédant des grandeurs caractéristiques réservées pour ce signal et qui indique la présence ou l'absence d'un manque de signal,
   - on superpose (9,19) le signal caractéristique au signal reproduit,
   - on corrige (20) les erreurs temporelles du signal composé,
   - on détecte (25) des signaux caractéristiques dans le signal dont les erreurs temporelles sont corrigées,
   - dans le cas de la présence d'un signal caractéristique indiquant un manque de signal, le signal de sortie d'une mémoire de manque de signal (25) est inséré (21) à titre de remplacement du signal caractéristique, dans le signal dont les erreurs temporelles sont corrigées, caractérisé en ce que
   - des signaux provenant de plusieurs pistes d'un support d'enregistrement sont reproduits simultanément,
   - les signaux reproduits sont numérisés (4,14),
   - dans chaque canal, au moins une combinaison de bits de code du signal numérique, affecté d'erreurs temporelles, est réservée pour la transmission du signal caractéristique, et
   - les signaux, dont les erreurs temporelles sont corrigées, sont réunis pour former un signal à un canal, les signaux caractéristiques du signal composé étant remplacés par le signal de sortie de la mémoire de manque de signal (24).

**2.** Procédé selon la revendication 1, caractérisé en ce qu'une combinaison de bits de code, qui est située à la limite de la plage de modulation, apparaît rarement dans le signal reproduit et est éliminée dans le signal reproduit, est réservée pour la transmission du signal caractéristique.

**3.** Procédé selon la revendication 1 ou 2, caractérisé en ce qu'on soumet le signal caractéristique ainsi que le signal affecté d'erreurs temporelles à une transformation temporelle.

**4.** Procédé selon l'une des revendications précédentes, caractérisé en ce qu'on retarde le signal caractéristique avant son insertion dans le signal numérique affecté d'erreurs temporelles.

**5.** Procédé selon l'une des revendications précédentes, caractérisé en ce qu'on réserve d'autres combinaisons de bits pour la transmission d'informations supplémentaires.

**6.** Dispositif pour compenser des manques de signal lors de la reproduction de signaux enregistrés magnétiquement, comprenant
   - un détecteur de manques de signal (6,7), qui contrôle d'éventuels manques de signal dans le signal reproduit, affecté d'erreurs temporelles, et produit un signal caractéristique qui possède des grandeurs caractéristiques réservées à cet effet et qui indique la présence ou l'absence d'un manque de signal,
   - un circuit (9,19) servant à superposer le signal caractéristique et le signal reproduit,
   - un circuit (20) pour corriger les erreurs temporelles du signal composé,
   - un circuit (25) pour détecter les signaux caractéristiques dans le signal, dont les erreurs temporelles sont corrigées,
   - une mémoire de manques de signal (24), dont le signal de sortie est utilisé, dans le cas de la présence d'un signal caractéristique indiquant un manque de signal, en tant que remplacement du signal caractéristique dans le signal dont les erreurs temporelles sont corrigées, caractérisé par
   - des moyens de reproduction (K1,K2) servant à reproduire simultanément des signaux provenant de plusieurs pistes d'un support d'enregistrement,
   - des convertisseurs analogique/numérique (4,14) pour numériser les signaux reproduits,
   - un circuit (5,15) prévu dans chaque canal pour réserver au moins une combinaison de bits de code du signal numérique affecté d'erreurs temporelles, pour la transmission du signal caractéristique, et
   - un circuit (20) pour réunir les signaux, dont les erreurs temporelles sont corrigées, à un signal à canal unique, les signaux caractéristiques étant remplacés dans le signal composé par le signal de sortie de la mémoire de manques de signal (24).

7. Dispositif selon la revendication 6, caractérisé en ce que les circuits (5,15) utilisés pour la transmission du signal caractéristique réservent une combinaison de bits de code du signal numérique, qui est affecté d'erreurs temporelles, combinaison qui est située au niveau de la limite de la plage de modulation et apparaît rarement dans le signal reproduit et qui est éliminé dans le signal reproduit.

8. Dispositif selon la revendication 6 ou 7, caractérisé en ce que les circuits (9,19) servant à superposer le signal caractéristique et le signal reproduit sont des commutateurs.

9. Dispositif selon l'une des revendications 6 à 8, caractérisé en ce que le circuit (25) utilisé pour détecter les signaux caractéristiques dans le signal, dont les erreurs temporelles sont corrigées, est un circuit ET.

10. Dispositif selon l'une des revendications 6 à 9, caractérisé en ce que le circuit (20) comporte, pour la correction d'erreurs temporelles, plusieurs mémoires RAM, dans lesquelles le signal subit en supplément une transformation temporelle.

11. Dispositif selon l'une des revendications 6 à 10, caractérisé en ce que, dans chaque canal, le signal de sortie du détecteur de manques de signal (6,16) est envoyé à un circuit de retardement (7,17).

EP 0 258 721 B1